# EUROPÄISCHE PATENTSCHRIFT

(11) **EP 0 671 453 B1**
(45) Veröffentlichungstag und Bekanntmachung des Hinweises auf die Patenterteilung: **15.04.1998**
(21) Anmeldenummer: 95200369.7
(22) Anmeldetag: 16.02.1995
(51) Int. Cl.: C10B 53/02

(54) **Verfahren zum Erzeugen von Holzkohle im Wanderbett**
Process for the production of charcoal in a moving bed
Procédé de fabrication de charbon de bois dans un lit en mouvement

(30) Priorität: 12.03.1994 DE 4408455
(43) Veröffentlichungstag der Anmeldung: 13.09.1995
(73) Patentinhaber: METALLGESELLSCHAFT AG, 60323 Frankfurt am Main (DE)
(72) Erfinder: Schmalfeld, Jörg, Dr., D-61381 Friedrichsdorf (DE); Eichwald, Hans, Dr., D-65428 Rüsselsheim (DE); Zentner, Udo, Dr., D-64347 Griesheim (DE)

(56) Entgegenhaltungen:
- EP-A- 0 070 710
- EP-A- 0 347 972
- BE-A- 836 515
- DE-C- 622 930
- FR-A- 2 528 062

## Beschreibung

Die Erfindung betrifft ein Verfahren zum Erzeugen von Kohle, insbesondere Holzkohle, aus Biomasse, insbesondere Holz, im Wanderbett in einem von heißem Gas durchströmten Schachtreaktor, in den man die Biomasse oben aufgibt und aus dessen unterem Bereich man die Kohle abführt, wobei man die Biomasse im Schachtreaktor zunächst durch eine oberhalb einer Schwelzone befindliche Vorwärmzone leitet, dem unteren Bereich der Vorwärmzone heißes Vorwärmgas mit einer Temperatur von 200 bis 550°C zuführt, das Vorwärmgas aufwärts durch die Vorwärmzone leitet und aus dem Schachtreaktor ein abgekühltes Vorwärmgas enthaltendes Abgas abzieht, getrocknete und auf Temperaturen von etwa 150 bis 280°C vorgewärmte Biomasse aus der Vorwärmzonedem oberen Bereich der Schwelzone zuführt, in den oberen Bereich der Schwelzone heißes Spülgas mit einer Temperatur von 250 bis 600°C einleitet, das heiße Spülgas abwärts durch die Schwelzone im Gleichstrom mit dem Wanderbett leitet, aus dem unteren Bereich der Schwelzone ein Spülgas und Schwelgase enthaltendes Gasgemisch aus dem Reaktor abzieht. Als Einsatzmaterial kommt üblicherweise vor allem stückiges Holz infrage, doch eignet sich das Verfahren ohne weiteres auch für Holzderivate, stückiges Lignin, Formkörper aus Biomasse oder Kokosnußschalen. Nur zur Vereinfachung wird nachfolgend zumeist von Holz und Holzkohle gesprochen, doch gelten die Erläuterungen analog auch für die anderen Einsatzmaterialien des Verfahrens.

Das eingangs genannte Verfahren zur Erzeugung von Holzkohle ist aus BE-A-836 515 bekannt. Hierbei leitet man auch Luft in die Schwelzone und erzeugt die nötige Energie durch partielle Verbrennung im Reaktor. Beim aus EP-C-0 347 972 bekannten Verfahren wird die Schwelzone von heißem Spülgas als Wärmeträger aufwärts durchströmt, d. h. man arbeitet im Gegenstrom zwischen Spülgas und dem sich abwärts bewegenden Holz.

Der Erfindung liegt die Aufgabe zugrunde, das eingangs genannte Verfahren so weiterzuentwickeln, daß die Bedingungen in der Schwelzone besser regulierbar werden. Gleichzeitig soll eine hochwertige Holzkohle erzeugt werden, die eine hohe Festigkeit und einen hohen Kohlenstoffgehalt aufweist. Erfindungsgemäß gelingt dies dadurch, daß man mindestens einen Teil des aus der Vorwärmzone abgezogenen Abgases und des aus der Schwelzone abgezogenen Gasgemisches in eine außerhalb des Schachtreaktors befindliche Brennkammer leitet und darin ein praktisch O₂-freies Verbrennungsgas mit einer Temperatur im Bereich von etwa 800 bis 1400°C erzeugt, und daß man einen ersten Teilstrom des Verbrennungsgases im Vorwärmgas in die Vorwärmzone und einen zweiten Teil des Verbrennungsgases im heißen Spülgas in die Schwelzone leitet.

Beim Verfahren der Erfindung wird das heiße Spülgas abwärts durch die Schwelzone im Gleichstrom mit dem zu schwelenden Holz geleitet. Dadurch wird das Holz im oberen Bereich der Schwelzone erhitzt, wodurch flüchtige Bestandteile des Holzes frei werden. Etwa im mittleren Bereich der Schwelzone wird der Zustand erreicht, wo die Temperatur des Holzes aufgrund einsetzender exothermer Reaktionen beim weiteren Schwelen von selbst weiter ansteigt. Diese exothermen Reaktionen beruhen in bekannter Weise vor allem auf dem in der Biomasse enthaltenen Sauerstoff. Das Spülgas und die entstehenden Schwelgase dämpfen die Wärmeentwicklung während der exothermen Reaktionen und sorgen dafür, daß die Verkokung des Holzes auch im unteren Bereich der Schwelzone mit weitgehend geregeltem Temperaturverlauf unter Vermeidung eines zu raschen Temperaturanstiegs erfolgt. Eine solche Temperaturregelung ist bei der Gegenstrom-Fahrweise zwischen Holz und Schwelgas nicht möglich. Beim erfindungsgemäßen Verfahren wird dafür gesorgt, daß insbesondere der Schwerteer im Holzstück weitgehend verbleibt und langsam verkokt, was für die Festigkeit der Holzkohle sehr wichtig ist.
In der über der Schwelzone befindlichen Vorwärmzone wird das Holz gleichzeitig auch getrocknet. Dem unteren Bereich der Vorwärmzone führt man heißes Vorwärmgas mit einer Temperatur von 200 bis 550°C zu, leitet das Vorwärmgas im Gegenstrom zum Einsatzmaterial aufwärts durch die Vorwärmzone und zieht oben aus dem Schachtreaktor ein abgekühltes Vorwärmgas enthaltendes Abgas ab. Das Abgas enthält vor allem Wasserdampf aus der Holztrocknung, daneben können darin auch noch brennbare Bestandteile wie Leichtteere, Kohlenoxid und Methan enthalten sein. Mindestens ein Teil des Abgases wird verbrannt, es dient somit der Erzeugung von Verbrennungsgas und damit von heißem Spülgas.
Das aus dem Schachtreaktor abgezogene Abgas wird zweckmäßigerweise nicht gänzlich verbrannt, sondern man mischt einen Teilstrom des Abgases zur Temperatureinstellung mit Verbrennungsgas und benutzt ein solches Gasgemisch sowohl als Vorwärmgas als auch als heißes Spülgas in der Schwelzone.

Üblicherweise wird die Verweilzeit des stückigen Holzes, das sich in Holzkohle umwandelt, in der Schwelzone auf etwa 5 bis 30 Stunden und zumeist 10 bis 20 Stunden eingestellt. Dabei erfährt ein Holzstück in der Schwelzone eine stündliche Temperatur-Erhöhung von 5 bis 20°C, wodurch eine schonende Schwelung erreicht wird. Um die Schwelbedingungen zu optimieren, kann man zusätzlich Schwelgas auch unterhalb des oberen Endes der Schwelzone in die Schwelzone leiten.

Wenn man Holzkohle mit besonders hohem Kohlenstoffgehalt und hoher Festigkeit erzeugen will, kann es sich empfehlen, unter der Schwelzone im Schachtreaktor eine Kalzinierzone vorzusehen und heißes Kalziniergas mit einer Temperatur im Bereich von 400 bis 800°C in den unteren Bereich der Kalzinierzone einzuleiten, damit es in der Kalzinierzone aufwärts strömt.

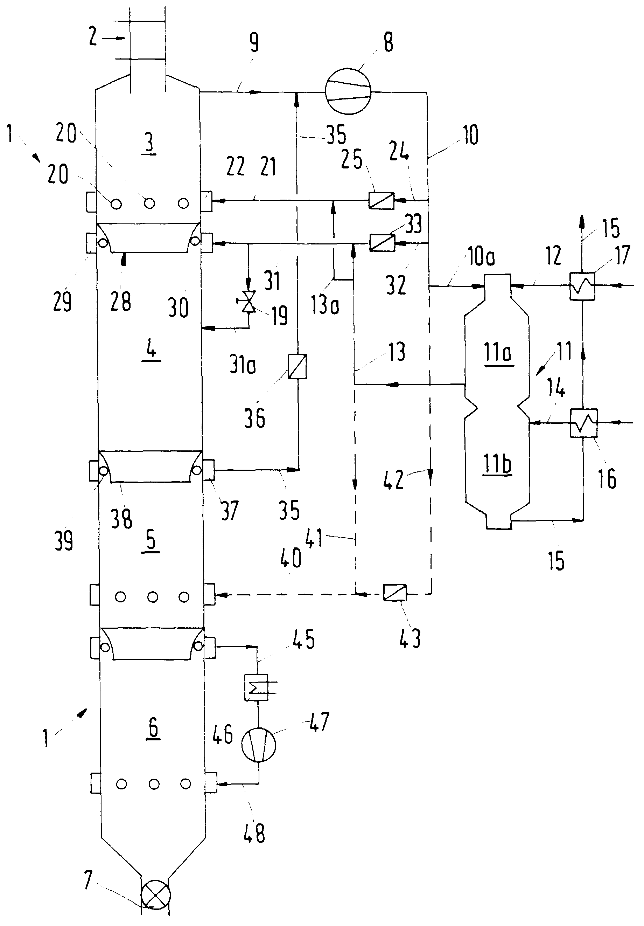

Ausgestaltungsmöglichkeiten des Verfahrens werden mit Hilfe der Zeichnung erläutert:

Der Schachtreaktor (1) weist eine Eintragsschleuse (2), eine Vorwärmzone (3), eine Schwelzone (4), eine Kalzinierzone (5), die auch weggelassen werden kann, sowie eine Kühlzone (6) auf. Biomasse, z. B. stückiges Holz, gelangt von der Eintragsschleuse (2) zunächst in die Vorwärmzone (3), die auch der Trocknung des Holzes dient, und die fertige, gekühle Holzkohle wird am unteren Ende des Reaktors (1) durch die Austragsschleuse (7) abgezogen. Brennbare Bestandteile enthaltendes Abgas wird durch das Gebläse (8) in der Leitung (9) aus dem oberen Bereich der Vorwärmzone (3) abgesaugt und teilweise durch die Leitungen (10) und (10a) der Brennkammer (11) zugeführt. Vorgewärmte Verbrennungsluft kommt aus der Leitung (12). Die Brennkammer (11) weist einen oberen Abschnitt (11a) auf, in welchem die Verbrennung mit nahstöchiometrischem Sauerstoffangebot erfolgt, so daß das in der Leitung (13) abgezogene Verbrennungsgas praktisch O₂-frei ist. Die Temperatur dieses Verbrennungsgases der Leitung (13) liegt im Bereich von 800 bis 1400°C und vorzugsweise im Bereich von 900 bis 1200°C. Restliches Abgas wird im unteren Bereich (11b) der Brennkammer (11) verbrannt, wobei man durch die Leitung (14) vorgewärmte Verbrennungsluft in solcher Menge zuführt, daß die Verbrennung mit überstöchiometrischem Sauerstoffangebot erfolgt. Das in der Leitung (15) abgezogene Rauchgas dient zweckmäßigerweise zunächst der Luftvorwärmung in den Wärmeaustauschern (16) und (17), bevor man es ableitet.

Dem unteren Bereich der Trocken- und Vorwärmzone (3) führt man durch Öffnungen (20) Vorwärmgas zu, das in der Leitung (21) herangeführt wird und zunächst durch eine Ringleitung (22) strömt. Die gleiche Art der Gaszuführung mit Ringleitung und Auslaßöffnungen findet sich auch im unteren Bereich der Kalzinierzone (5) sowie im unteren Bereich der Kühlzone (6). Zur Erzeugung des Vorwärmgases zieht man durch die Leitung (24) einen Teilstrom des Abgases der Leitung (10) ab, führt den Teilstrom durch eine Regelklappe (25) und mischt in der Leitung (21) heißes Verbrennungsgas aus den Leitungen (13) und (13a) zu. Das Vorwärmgas der Leitung (21) tritt mit einer Temperatur im Bereich von 200 bis 550°C und vorzugsweise 250 bis 400°C in den unteren Bereich der Vorwärmzone (3) ein, strömt in dieser Zone aufwärts und verläßt den Reaktor durch die Leitung (9). Durch das Vorwärmgas wird das von der Eintragsschleuse (2) kommende stückige Holz getrocknet und auf Temperaturen von etwa 150 bis 280°C und üblicherweise 180 bis 250°C vorgewärmt.

Das getrocknete und vorgewärmte stückige Holz, das ein Wanderbett bildet, bewegt sich abwärts durch eine konische, trichterartige Ringschürze (28) in die Schwelzone (4). Die Ringschürze (28) sorgt für den ungehinderten Gaszutritt des heißen Spülgases von der Ringleitung (29) durch die Öffnungen (30) in den oberen Bereich der Schwelzone (4). Das heiße Spülgas kommt aus der Leitung (31) und besteht aus einem Teilstrom des Abgases, den man durch die Leitung (32) abzweigt und über die Regelklappe (33) führt, sowie aus einem Teilstrom des Verbrennungsgases der Leitung (13). Ein Teilstrom des heißen Spülgases kann durch die Zweigleitung (31a) unterhalb der Öffnungen (30) in die Schwelzone eingeleitet werden, wobei man die Menge des Teilstroms durch das Regelorgan (19) regelt. Dieser Spülgas-Teilstrom kann zweckmäßig sein, um die Bedingungen in der Schwelzone (4) zu optimieren.

Das heiße Spülgas der Leitung (31) weist eine Temperatur im Bereich von 250 bis 600°C und vorzugsweise 300 bis 450°C auf. Es tritt über die Ringleitung (29) und die Öffnungen (30) in den oberen Bereich der Schwelzone (4) ein und strömt in der Zone (4) abwärts im Gleichstrom mit dem Wanderbett des stückigen Holzes und der gebildeten Holzkohle. Genutztes Spülgas wird zusammen mit den entstehenden Schwelgasen am unteren Ende der Schwelzone (4) durch die Leitung (35) abgezogen, über die Regelklappe (36) geführt und dem Abgas der Leitung (9) zugegeben. Die Ausgestaltung des Reaktors im unteren Bereich der Schwelzone (4) mit einer Ringschürze (38), Gasdurchtrittsöffnungen (39) und einer Ringleitung (37) ist ähnlich wie am Kopf der Schwelzone (4).

Der Reaktor (1) weist unterhalb der Schwelzone (4) eine Kalzinierzone (5) auf, die aber nicht unbedingt erforderlich ist und weggelassen werden kann, wenn an den Kohlenstoffgehalt und an die Festigkeit der erzeugten Holzkohle keine besonderen Ansprüche gestellt werden. In der Kalzinierzone (5) strömt Kalziniergas aus der Leitung (40), das eine Temperatur im Bereich von 400 bis 800°C aufweist, aufwärts im Gegenstrom zur Holzkohle und wird zusammen mit dem am unteren Ende der Schwelzone (4) ankommenden Gasgemisch durch die Leitung (35) abgezogen. In der Kalzinierzone erfolgt eine weitere Temperatur-Erhöhung und damit eine Erhöhung und Vergleichmäßigung des Kohlenstoff-Gehalts der Holzkohle. Das Kalziniergas wird ebenfalls aus einem Teilstrom des Verbrennungsgases der Leitung (13) gebildet, den man in der Leitung (41) heranführt, wobei man diesem Verbrennungsgas einen in der Leitung (42) über die Regelklappe (43) herangeführten Abgas-Teilstrom zumischt.

Die fertige, noch heiße Holzkohle wird am unteren Ende des Reaktors (1) durch eine Kühlzone (6) geführt, die aufwärts von im Kreislauf geführtem Kühlgaz durchströmt wird. Das Kühlgas, z.B. abgekühltes Spülgas, wird durch die Leitung (45) abgezogen, durch einen Kühler (46) geführt und durch das Gebläse (47) und die Leitung (48) zurück in die Kühlzone geleitet.

### Beispiele

In einer der Zeichnung entsprechenden Anlage wird Holzkohle aus 7260 kg/h stückigem brasilianischem Holz (Stückgrößen im Bereich von 30 bis 150 mm) hergestellt. Gemäß Beispiel 1 wird Eucalyptus urophylla mit 15 Gew.% Wasser verarbeitet, wobei man einen Schachtreaktor (1) mit Kalzinierzone (5) aber ohne die Leitung (31a) verwendet. Im Beispiel 2 ist das Holz Eucalyptus camaldulensis mit 20 Gew.% Wasser und beim Schachtreaktor fehlen die Kalzinierzone und die Leitungen (31a) und (40).

Durch die verschiedenen Leitungen werden folgende Gasmengen Q (in Nm³/h) mit zugehörigen Temperaturen T (in °C) geführt, wobei die Daten teilweise berechnet sind:

| | Beispiel 1 | | Beispiel 2 | |
|---|---|---|---|---|
| Leitung | Q | T | Q | T |
| 21 | 7800 | 500 | 9050 | 500 |
| 9 | 9150 | 105 | 10850 | 105 |
| 31 | 450 | 500 | 450 | 500 |
| 35 | 5850 | 435 | 3750 | 465 |
| 40 | 1575 | 650 | - | - |
| 48 | 4100 | 50 | 3400 | 50 |
| 45 | 4100 | 350 | 3400 | 350 |
| 10a | 8200 | 255 | 8070 | 225 |
| 12 | 7200 | 200 | 6300 | 200 |
| 13 | 3100 | 1150 | 3000 | 1075 |

Für die Holzkohle sind folgende Daten wichtig:

| | Beispiel 1 | Beispiel 2 |
|---|---|---|
| Verweilzeit in der Schwelzone (4) | 18 h | 22 h |
| Verweilzeit in der Kalzinierzone (5) | 4 h | - |
| Menge der erzeugten Holzkohle | 1850 kg/h | 2220 kg/h |
| fixer Kohlenstoffgehalt der Holzkohle | 91 Gew.-% | 80 Gew.-% |

## Patentansprüche

1. Verfahren zum Erzeugen von Kohle, insbesondere Holzkohle, aus Biomasse, insbesondere Holz, im Wanderbett in einem von heißem Gas durchströmten Schachtreaktor, in den man die Biomasse oben aufgibt und aus dessen unterem Bereich man die Kohle abführt, wobei man die Biomasse im Schachtreaktor zunächst durch eine oberhalb einer Schwelzone befindliche Vorwärmzone leitet, dem unteren Bereich der Vorwärmzone heißes Vorwärmgas mit einer Temperatur von 200 bis 550 °C zuführt, das Vorwärmgas aufwärts durch die Vorwärmzone leitet und aus dem Schachtreaktor ein abgekühltes Vorwärmgas enthaltendes Abgas abzieht, getrocknete und auf Temperaturen von 150 bis 280 °C vorgewärmte Biomasse aus der Vorwärmzone dem oberen Bereich der Schwelzone zuführt, in den oberen Bereich der Schwelzone heißes Spülgas mit einer Temperatur von 250 bis 600 °C einleitet, das heiße Spülgas abwärts durch die Schwelzone im Gleichstrom mit dem Wanderbett leitet, aus dem unteren Bereich der Schwelzone ein Spülgas und Schwelgase enthaltendes Gasgemisch aus dem Reaktor abzieht, dadurch gekennzeichnet, daß man mindestens einen Teil des aus der Vorwärmzone abgezogenen Abgases und des aus der Schwelzone abgezogenen Gasgemisches in eine außerhalb des Schachtreaktors befindliche Brennkammer leitet und darin ein praktisch O₂-freies Verbrennungsgas mit einer Temperatur im Bereich von 800 bis 1400 °C erzeugt, und daß man einen ersten Teilstrom des Verbrennungsgases im Vorwärmgas in die Vorwärmzone und einen zweiten Teilstrom des Verbrennungsgases im heißen Spülgas in die Schwelzone leitet.

2. Verfahren nach Anspruch 1, dadurch gekennzeichnet, daß die Verweilzeit der Biomasse, die sich in Kohle umwandelt, in der Schwelzone 5 bis 30 Stunden beträgt.

3. Verfahren nach Anspruch 1 oder 2, dadurch gekennzeichnet, daß man einen Teilstrom des aus der Vorwärmzone abgezogenen Abgases im heißen Spülgas in die Schwelzone leitet.

4. Verfahren nach Anspruch 1 oder einem der folgenden, dadurch gekennzeichnet, daß man heißes Spülgas mit einer Temperatur im Bereich von 300 bis 600 °C zusätzlich unterhalb des oberen Bereichs der Schwelzone in die Schwelzone leitet.

5. Verfahren nach einem der Ansprüche 1 bis 4, dadurch gekennzeichnet, daß sich unter der Schwelzone im Schachtreaktor eine Kalzinierzone befindet, in deren unteren Bereich heißes Kalziniergas mit einer Temperatur im Bereich von 400 bis 800 °C eingeleitet wird, das in der Kalzinierzone aufwärts strömt.

## Claims

1. A process of producing coal, in particular charcoal, from biomass, in particular wood, in the moving bed of a shaft reactor through which hot gas is flowing, into which shaft reactor the biomass is charged from the top, and from whose lower portion the coal is withdrawn, where the biomass in the shaft reactor is first of all passed through a preheating zone disposed above a carbonization zone, hot preheating gas having a temperature of 200 to 5500C is supplied to the lower portion of the preheating zone, the preheating gas is passed upwards through the preheating zone and from the shaft reactor an exhaust gas containing cooled preheating gas is withdrawn, dried biomass preheated to temperatures of 150 to 2800C is supplied from the preheating zone to the upper portion of the carbonization zone, hot scavenging gas having a temperature of 250 to 6000C is introduced into the upper portion of the carbonization zone, the hot scavenging gas is passed downwards through the carbonization zone cocurrently with the moving bed, and from the lower portion of the carbonization zone a gas mixture containing scavenging gas and carbonization gases is withdrawn from the reactor, characterized in that at least part of the exhaust gas withdrawn from the preheating zone and of the gas mixture withdrawn from the carbonization zone is introduced into a combustion chamber disposed outside the shaft reactor, in which combustion chamber a combustion gas is produced which is virtually free from O₂ and has a temperature in the range from 800 to 1400°C, and that a first partial stream of the combustion gas is introduced into the preheating zone in the preheating gas, and a second partial stream of the combustion gas is introduced into the carbonization zone in the hot scavenging gas.

2. The process as claimed in claim 1, characterized in that the dwell time of the biomass, which is converted into coal, in the carbonization zone is 5 to 30 hours.

3. The process as claimed in claim 1 or 2, characterized in that a partial stream of the exhaust gas withdrawn from the preheating zone is introduced into the carbonization zone in the hot scavenging gas.

4. The process as claimed in claim 1 or any of the preceding claims, characterized in that hot scavenging gas having a temperature in the range from 300 to 600°C is additionally introduced into the carbonization zone below the upper portion of the carbonization zone.

5. The process as claimed in any of claims 1 to 4, characterized in that below the carbonization zone in the shaft reactor a calcining zone is provided, in whose lower portion hot calcining gas having a temperature in the range from 400 to 800°C is introduced, which flows upwards in the calcining zone.

## Revendications

1. Procédé de fabrication de charbon, en particulier de charbon de bois, à partir d'une biomasse, en particulier du bois dans un lit en mouvement dans un réacteur à cuve traversé par un gaz chaud, dans lequel on charge la biomasse par le haut et on enlève le charbon par le bas de sa partie inférieure, la biomasse étant conduite dans le réacteur à cuve d'abord à travers une zone de préchauffage se trouvant au-dessus d'une zone de carbonisation lente, un gaz de préchauffage chaud étant introduit dans la partie inférieure de la zone de préchauffage à une température de 200° à 550°C, le gaz de préchauffage étant conduit vers le haut à travers la zone de préchauffage et un gaz résiduaire contenant du gaz de préchauffage refroidi étant retiré du réacteur à cuve, une biomasse séchée et préchauffée à des températures de 150° à 280°C étant introduite à partir de la zone de préchauffage dans la partie supérieure de la zone de carbonisation lente, dans la partie supérieure de la zone de carbonisation lente étant introduit un gaz de balayage chaud à une température de 250° à 600°C, le gaz de balayage chaud étant conduit vers le bas à travers la zone de carbonisation lente en équicourant avec le lit en mouvement, un mélange gazeux contenant du gaz de balayage et des gaz primaires étant retiré du réacteur dans la partie inférieure de la zone de carbonisation lente, caractérisé en ce qu'on introduit au moins une partie du gaz résiduaire extrait de la zone de préchauffage et du mélange gazeux extrait de la zone de carbonisation lente dans une chambre de combustion se trouvant en dehors du réacteur à cuve et que l'on y produit un gaz de combustion pratiquement exempt de O₂ à une température située dans une gamme de 800° à 1400°C et en ce qu'on introduit une première partie du flux du gaz de combustion dans le gaz de préchauffage dans la zone de préchauffage et une deuxième partie du flux de gaz de combustion dans le gaz de balayage chaud dans la zone de carbonisation lente.

2. Procédé selon la revendication 1, caractérisé en ce que la durée de séjour de la biomasse, qui est convertie en charbon, est de 5 à 30 heures dans la zone de carbonisation lente.

3. Procédé selon la revendication 1 ou 2, caractérisé en ce qu'on introduit une partie du flux du gaz résiduaire extrait de la zone de préchauffage dans le gaz de balayage chaud dans la zone de carbonisation lente.

4. Procédé selon la revendication 1 ou une des suivantes, caractérisé en ce qu'on introduit dans la zone de carbonisation lente, un gaz de balayage chaud à une température située dans une gamme de 300° à 600°C, également en-dessous de la partie supérieure de la zone de carbonisation lente.

5. Procédé selon les revendications 1 à 4, caractérisé en ce qu'une zone de calcination se trouve sous la zone de carbonisation lente dans le réacteur à cuve, dans laquelle on introduit dans sa partie inférieure un gaz de calcination chaud à une température située dans une gamme de 400° à 800°C qui s'écoule vers le haut dans la zone de calcination.
